**Europäisches Patentamt**

**European Patent Office**

**Office européen des brevets**

(11) Veröffentlichungsnummer: **0 409 011 A1**

# EUROPÄISCHE PATENTANMELDUNG

(21) Anmeldenummer: **90112899.1**

(22) Anmeldetag: **06.07.90**

(51) Int. Cl.5: **B29C 47/02**, B29C 47/28, D07B 1/16

(30) Priorität: **19.07.89 CH 2694/89**

(43) Veröffentlichungstag der Anmeldung: **23.01.91 Patentblatt 91/04**

(84) Benannte Vertragsstaaten: **AT BE CH DE DK ES FR GB GR IT LI LU NL SE**

(71) Anmelder: **Kühne, Emil**
**Rainweg 6**
**CH-8862 Schübelbach(CH)**

(72) Erfinder: **Kühne, Emil**
**Rainweg 6**
**CH-8862 Schübelbach(CH)**

(74) Vertreter: **Troesch, Jacques J., Dipl.-Ing. et al**
**Walchestrasse 19**
**CH-8035 Zürich(CH)**

(54) Verfahren zum Ummanteln eines Kabelstrangbündels.

(57) Um ein Kabelstrangbündel (1), bestehend aus mehreren Kabelsträngen, oder ein Drahtseil, bestehend aus mehreren Drähten, mittels eines thermoplastischen Polymers zu ummanteln, erfolgt die Extrusion für die Ummantelung des Strangbündels resp. Drahtseiles zweistufig in zwei sich nachfolgenden getrennten Extrusionsschritten. Dabei werden in einem ersten Extrusionsschritt die Kabelstränge (1) resp. Drähte einzeln ummantelt, und in einem anschliessenden zweiten Extrusionsschritt wird das Strangbündel resp. das Drahtseil gesamthaft ummantelt.

FIG.1

## VERFAHREN ZUM UMMANTELN EINES KABELSTRANGBÜNDELS

Die vorliegende Erfindung befasst sich mit Verfahren zum Ummanteln eines Kabelstrangbündels, bestehend aus mehreren Kabelsträngen, oder eines Drahtseiles, bestehend aus mehreren Drähten, mittels eines thermoplastischen Polymers, mit einer Anordnung zum Ummanteln gemäss dem Wortlaut des Oberbegriffes nach Anspruch 8, mit einer Verwendung der Verfahren sowie mit einem Querspritzkopf gemäss dem Wortlaut des Oberbegriffes nach Anspruch 10.

Das Ummanteln von Kabeln oder metallenen Kabelsträngen ist an sich bestens bekannt, wobei der Zweck dieser Ummantelung entweder in einem mechanischen Schutz des Kabels resp. der Kabelstränge oder in der elektrischen Isolation liegt.

In der Vorspanntechnik - im Brückenbau, beim Bau von Stützmauern, Kunstbauten etc. - werden ebenfalls Kabelstränge resp. Strangbündel, beispielsweise bestehend aus Stahlseilen, verwendet. Diese Kabelstränge resp. Strangbündel werden insbesondere für den Korrosionsschutz und als Schutz gegen mechanische Beanspruchung ebenfalls ummantelt. Diese Ummantelung erfolgt zurzeit weitgehendst mittels Aufschiebens oder Ueberstülpens eines Mantelrohres resp. einer Mantelhülle, bestehend aus einem thermoplastischen Kunststoff, da ein Aufextrudieren einer derartigen Hülle infolge vorgängig erfolgten Einfettens der Kabelstränge weitgehendst unmöglich ist.

Anderseits kann wohl auf das Einfetten dieser Metallkabelstränge verzichtet werden, um so ein Ummanteln des Kabelstrangbündels zu ermöglichen. Doch mit den heute bekannten Ummantelungstechniken kann bei den im Bauwesen und speziell in der Vorspanntechnik verwendeten dikken Kabelsträngen resp. Strangbündeln mit sehr grossem Querschnitt nur ein Umhüllen des Stranges erreicht werden, so dass im Innern des Stranges Hohlräume verbleiben. Gerade aber in diesen Hohlräumen kann sich Kondenswasser einnisten resp. bilden, das so im Innern des Kabelstrangbündels nach erfolgter Montage, beispielsweise beim Vorspannen einer Brücke, zu Korrosionsschäden führen kann. Welche verheerenden Auswirkungen diese Korrosionsschäden an Drahtseilen und Kabelstrangbündeln in der Vorspanntechnik haben können, zeigen die neuesten Beispiele von Autobahnbrücken, die schon ca. zehn Jahre nach Inbetriebnahme resp. nach Bauende für den Verkehr wieder gesperrt werden müssen, da die Sicherheit nicht mehr gewährleistet ist.

Eine Möglichkeit, diese Hohlräume im Innern von Kabelstrangbündeln auszufüllen, bestünde im Applizieren eines Duroplasten, ähnlich dem sog. filament winding, vor dem Extrudieren des gesamten Strangbündels mit dem thermoplastischen Polymer. Es hat sich aber gezeigt, dass derartig hergestellte Metallstrangbündel zuwenig flexibel sind, da der verwendete Duroplast zu spröde ist.

Es ist daher eine Aufgabe der vorliegenden Erfindung, ein Verfahren zu schaffen, mittels welchem metallene Kabelstrangbündel oder Drahtseile mit einem thermo plastischen Polymer derart ummantelt werden können, dass auch das Innere des Strangbündels resp. des Drahtseiles weitgehendst vollständig mit dem Thermoplasten durchdrungen wird.

Erfindungsgemäss wird die Aufgabe mittels eines Verfahrens, vorzugsweise nach mindestens einem der Ansprüche, wie insbesondere nach Anspruch 1, gelöst.

Für das Ummanteln des Kabelstrangbündels, bestehend aus zwei oder mehreren Kabelsträngen, resp. eines Drahtseiles, bestehend aus zwei oder mehreren Drähten, mittels eines thermoplastischen Polymers wird vorgeschlagen, dass die Ummantelung zweistufig in zwei sich nachfolgenden, getrennten Extrusionsschritten erfolgt.

Dabei wird vorgeschlagen, dass in einem ersten Extrusionsschritt die einzelnen Kabelstränge resp. Drähte weitgehendst einzeln ummantelt werden und in einem anschliessenden zweiten Extrusionsschritt das Strangbündel resp. das Drahtseil als Ganzes mit dem Thermoplasten ummantelt wird.

Es wird vorgeschlagen, dass im ersten Extrusionsschritt die Kabelstränge oder Drähte gemeinsam einer ersten Extrusionsdüse für die Ummantelung zugeführt werden, wobei jeder Strang resp. jeder Draht einzeln durch eine eigene Bohrung im Düsenkopf geführt und ummantelt Wird, und dass im zweiten Extrusionsschritt die so einzeln ummantelten Stränge oder Drähte gemeinsam als Strangbündel resp. Drahtseil durch eine einzige Bohrung im Düsenkopf einer zweiten Extru sionsdüse geführt und ummantelt werden.

Um beim Extrudieren der einzelnen Stränge resp. Drähte im ersten Extrusionskopf im vor den Bohrungen liegenden Stauraum ein Massepolster mit dem thermoplastischen Polymer mit genügend hohem Staudruck aufbauen zu können, wird vorgeschlagen, dass der Stauraum im Bereich der Bohrungen wenigstens teilweise kugelförmig ausgebildet ist.

Weiter wird vorgeschlagen, dass die einzelnen Kabelstränge resp. Drähte vor dem Zuführen zum ersten Extrusionswerkzeug aufgeheizt werden.

Für das Ummanteln eines metallenen Kabelstrangbündels resp. eines Drahtseiles in bevorzugter Art und Weise wird ein Verfahren gemäss dem Wortlaut nach Anspruch 7 vorgeschlagen.

Für die Durchführung der erfindungsgemässen Verfahren wird weiter eine Anordnung gemäss dem Wortlaut nach Anspruch 8 vorgeschlagen.

Die erfindungsgemässen Verfahren eignen sich insbesondere für das Ummanteln von Metallkabelstrangbündeln oder Drahtseilen, vorgesehen für das Vorspannen von Bauwerken.

Die erfindungsgemässen Verfahren eignen sich aber auch für die Ummantelung irgendwelcher Kabelstrangbündel, bestehend aus mehreren Kabelsträngen, oder von Drahtseilen, bestehend aus mehreren Drähten.

Gemäss der Erfindung wird weiter ein Querspritzkopf mit einem Extrusionswerkzeug zum Durchführen eines der vorab vorgeschlagenen erfindungsgemässen Verfahren beschrieben, welcher sich durch den Wortlaut nach Anspruch 10 auszeichnet.

Die Erfindung wird nun anschliessend anhand von Beispielen unter Bezug auf die beigefügten Figuren näher erläutert.

Dabei zeigen:

Fig. 1 eine erfindungsgemässe Extrusionsanlage in Obenansicht für das Ummanteln eines Kabelstrangbündels,

Fig. 2 die Anlage gemäss Fig. 1 in Seitenansicht,

Fig. 3 einen Querspritzkopf, entsprechend einem ersten erfindungsgemässen Extrusionswerkzeug, in Längsperspektive, in die einzelnen Komponenten zerlegt,

Fig. 4 das erste erfindungsgemässe Extrusionswerkzeug im Längsschnitt im Bereich des Stauraumes und des Düsenkopfes,

Fig. 5 den Düsenkopf von Fig. 4 im Querschnitt entlang der Linie I-I,

Fig. 6 schematisch dargestellt den ersten Extrusionsvorgang der einzelnen Kabelstränge,

Fig. 7 den zweiten Querspritzkopf analog dem zweiten erfindungsgemässen Extrusionswerkzeug in Längsperspektive, in die einzelnen Komponenten zerlegt,

Fig. 8 das zweite Extrusionswerkzeug im Längsschnitt im Bereich des Stauraumes und des Düsenkopfes,

Fig. 9 den Düsenkopf gemäss Fig. 8 im Querschnitt entlang der Linie II-II und

Fig. 10 schematisch dargestellt den zweiten Extrusionsvorgang zum Ummanteln des Kabelstrangbündels.

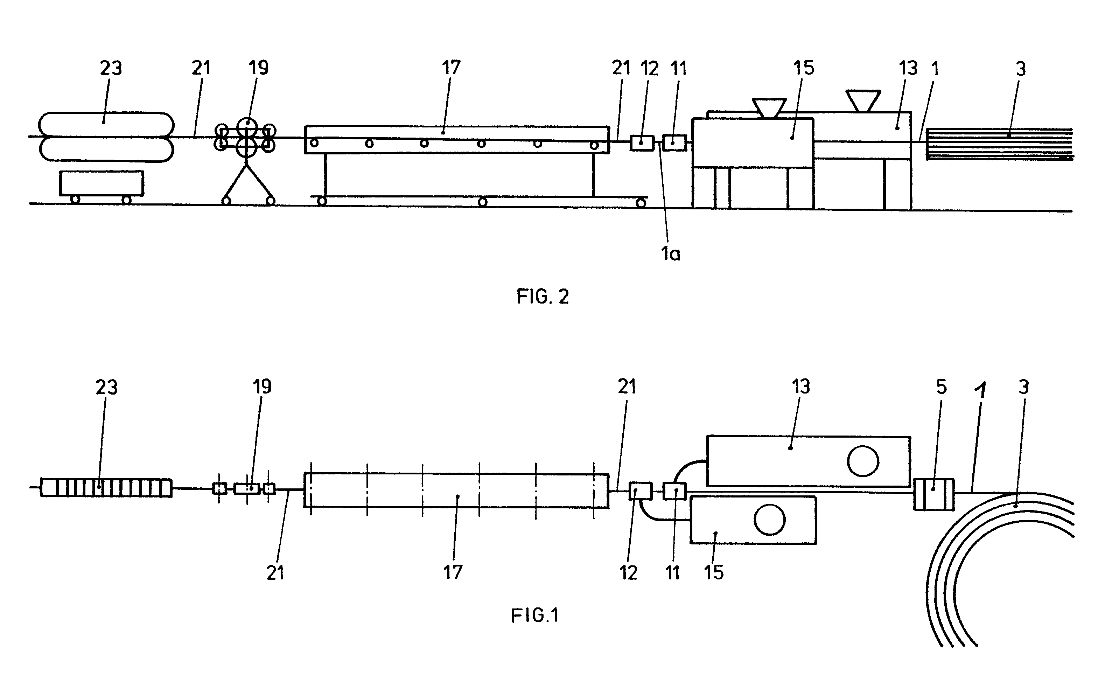

Die Fig. 1 und 2 zeigen, schematisch dargestellt, eine komplette Extrusionsanlage für das erfindungsgemässe Extrudieren resp. Ummanteln eines Kabelstrangbündels resp. eines Drahtseiles, bestehend aus zwei oder mehreren einzelnen Kabelsträngen oder Drähten. Dabei zeigt Fig. 1 die erfindungsgemässe Anlage von oben und Fig. 2 die entsprechende Anlage in Seitenansicht.

Die einzelnen Metallkabelstränge 1 werden bereits gebündelt von einer Strangrolle 3 abgezogen und zunächst gemeinsam durch eine Strangvorzentrierungseinheit 5 hindurchgeleitet, um dann als Bündel dem ersten Extrusionswerkzeug 11 zugeführt zu werden. Beim Extrusionswerkzeug 11 handelt es sich um einen sog. Querspritzkopf, welcher nachfolgend im Detail erläutert werden soll. Der Querspritzkopf 11 wird von ei nem Extruder 13 mit dem thermoplastischen Polymer gespiesen.

Nach der Durchführung einer ersten Extrusionsstufe, in welcher die einzelnen Kabelstränge einzeln ummantelt werden, werden die einzelnen Stränge nach Verlassen des Extrusionswerkzeuges 11 als zusammenhängendes Strangbündel 1a einem zweiten Extrusionswerkzeug 12 zugeführt. Das Strangbündel 1a ist deshalb weitgehendst zusammenhängend, da infolge der Plastizität des Thermoplasten beim Verlassen des Werkzeuges 11 die einzelnen Kabelstränge "aneinander kleben". Auch auf dieses Phänomen soll später eingegangen werden.

Im zweiten Extrusionswerkzeug 12 erfolgt mittels vorzugsweise demselben thermoplastischen Material, das aus einem Extruder 15 zugeführt wird, eine zweite Extrusionsstufe.

Das nun vollständig ummantelte Kabelstrangbündel 21 verlässt das zweite Extrusionswerkzeug 12, um einem Wasserbad 17 zugeführt zu werden. Nach Durchlauf durch das Wasserbad, bei dem es sich um ein in der Extrusionstechnik bekanntes Element handelt, wird das abgekühlte Kabelstrangbündel beispielsweise durch einen Dreifachraupenabzug 23 abgezogen. Falls erforderlich oder erwünscht, kann das das Wasserbad verlassende Kabelstrangbündel oder das ummantelte Drahtseil durch eine Signieranlage 19 geführt werden, in welcher das Bündel oder das Drahtseil zusätzlich mit Firmennamen, Produktionsdatum, Materialtyp usw. gekennzeichnet (signiert) werden kann.

Falls erwünscht oder erforderlich, kann die in den Fig. 1 und 2 beschriebene Anlage weiter nach der Seilvorzentrierung 5 mit Gasbrennern ausgerüstet werden, mittels welchen die einzelnen unbeschichteten Kabelstränge vorgeheizt werden können.

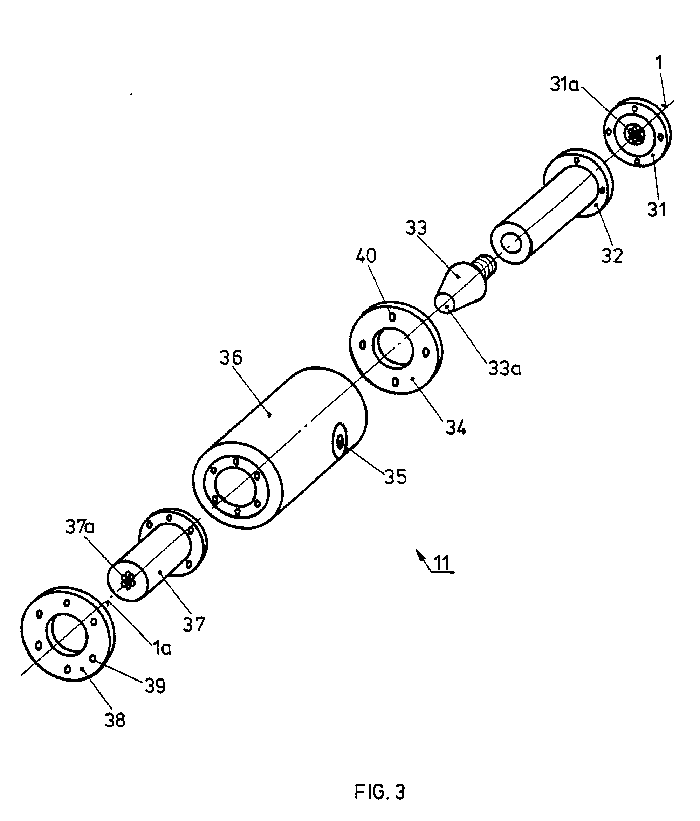

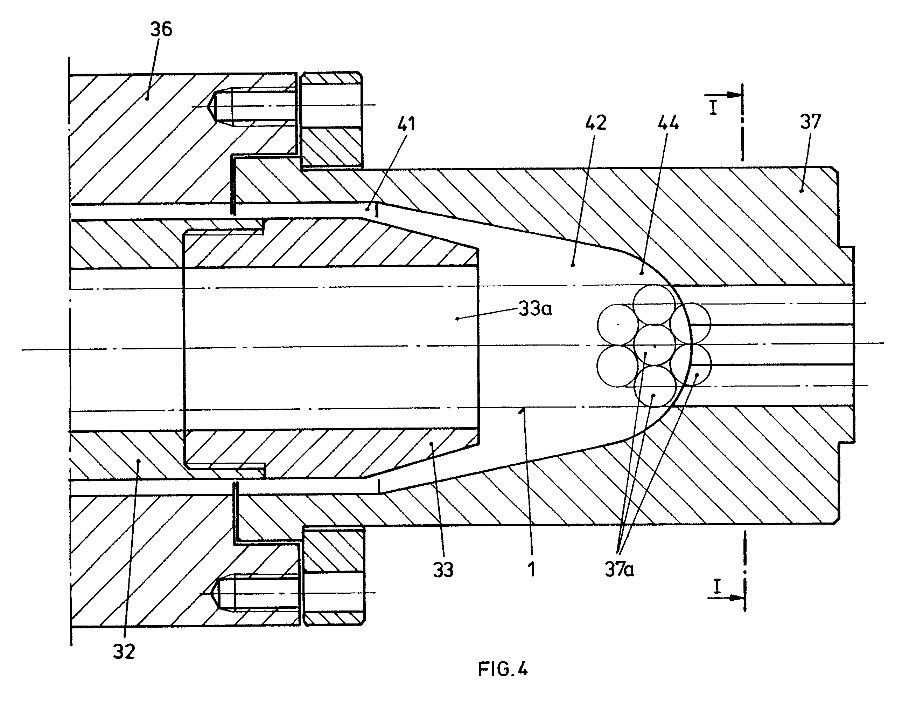

In Fig. 3 ist das erste Extrusionswerkzeug 11 resp. der Querspritzkopf 11 in Längsperspektive, in die einzelnen Komponenten zerlegt, dargestellt. Das Strangbündel 1, umfassend die einzelnen Kabelstränge, wird durch einen Flansch 31 in das Werkzeug 11 eingeführt, wobei im Flansch, entsprechend der Anzahl Kabelstränge, Bohrungen 31a vorgesehen sind. Nach dem Durchlauf durch eine Pinole 32, auf welche senkrecht dazu der flüssige Kunststoff aus dem Extruder zugeführt wird, wird das Kabelstrangbündel 1 durch eine Austrittsöffnung 33a in der Pinolenspitze 33 dem Stauraum (wird in Fig. 4 näher erläutert) zugeführt, in welchen ebenfalls das entlang der Pinole geführte thermoplastische Polymer zugespiesen wird. Die Pinole 32 selbst ist durch ein Pinolengehäuse 36 ummantelt, welches für die Einspeisung des Thermoplasten resp. für die Verbindung zum Extruder eine Oeffnung 35 umfasst. Für das Zentrieren der Düse im Gehäuse 36 ist weiter ein Flansch 34 vorgesehen.

Nach dem Durchführen des Strangs resp. Strangbündels 1 durch die Pinole 32 und den Stauraum wird dieser dem ersten Düsenwerkzeug 37 zugeführt, in welchem pro Strang je eine Bohrung 37a vorgesehen ist. Für das Festhalten des Werkzeuges am Pinolengehäuse 36 ist wiederum ein weiterer Flansch 38 vorgesehen, welcher beispielsweise mittels sog. Inbusschrauben 39 am Gehäuse festgehalten wird. Analog dieser Inbusschrauben 39 im Flansch 38 sind übrigens auch Inbusschrauben 40 im Flansch 34 für das Haltern der Pinole 32 mit dem Gehäuse 36 vorgesehen.

Die so ummantelten einzelnen Kabelstränge verlassen die Bohrungen 37a in Form eines zusammenhängenden Kabelstrangbündels 1a.

In Fig. 4 ist das erfindungsgemässe erste Extrusionswerkzeug resp. der erste Querspritzkopf im Längsschnitt im Bereich des Stauraumes und der Werkzeugdüse dargestellt, um die Ummantelung im ersten Extrusionsschritt besser erläutern zu können. An der Spitze der Pinole 32 angeordnet ist die Pinolenspitze 33 mit der Bohrung 33a. Die Bohrung 33a mündet in den Stauraum 42, in welchen durch seitliche Führungskanäle 41 das flüssige thermoplastische Polymer zugeführt wird. Die Pinole 32 wird durch das Pinolengehäuse 36 ummantelt, wobei das flüssige Polymer, zwischen den beiden fliessend, den Zuführkanälen 41 zugeführt wird.

Der Stauraum selbst wird durch die Werkzeugdüse 37 umgeben und mündet in die Bohrungen 37a der Werkzeugdüse. An seiner Frontseite, d.h. im Bereich 44 der Bohrungen 37a, ist der Stauraum 42 kugelförmig ausgebildet.

Die Funktionsweise der Beschichtung der einzelnen Kabelstränge resp. des Kabelstrangbündels 1 erfolgt dahingehend, dass das Strangbündel 1 durch die Pinole, die Pinolenspitze und durch die Bohrung 33a in den Stauraum 42 zugeführt wird. Diesem Stauraum 42 wird gleichzeitig durch die Zuführkanäle 41 das flüssige, aufgeheizte thermoplastische Polymer zugeführt, wobei durch die kugelförmige Ausbildung des Stauraumes 42 im Bereich 44 sog. Umkehrdrücke entstehen und sich somit ein Massepolster im Bereich 44 mit sehr hohen Drücken aufbaut. Infolge dieser sehr hohen Drücke wird das thermoplastische Polymer in die Bereiche zwischen die einzelnen Kabelstränge gedrückt, wodurch diese komplett mit dem Thermoplasten umgeben werden. Anschliessend an den Stauraum 42 wird jeder einzelne Kabelstrang in eine eigene Bohrung 37a geführt, worin die Ummantelung des einzelnen Kabelstranges mit dem thermoplastischen Polymer komplettiert wird.

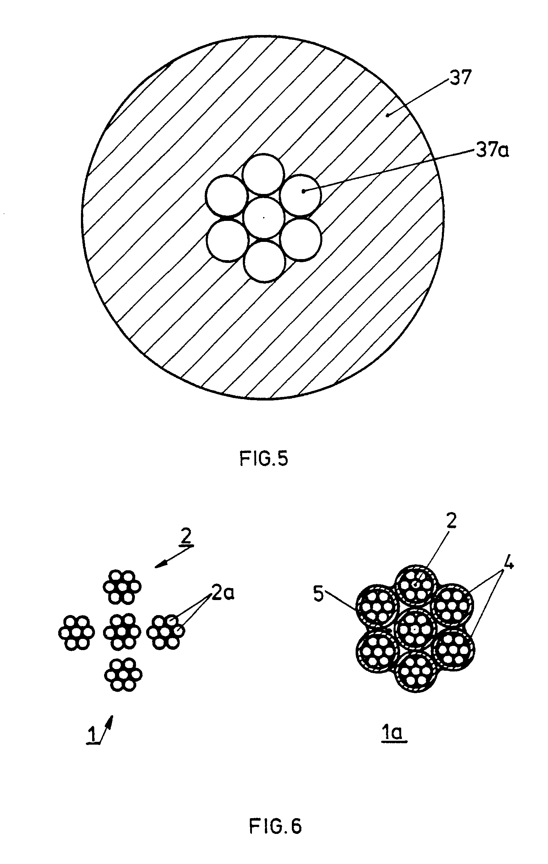

In Fig. 5 ist im übrigen die Werkzeugdüse 37 entlang der Linie I-I von Fig. 4 im Querschnitt dargestellt. Darin sind die einzelnen Bohrungen 37a deutlich sichtbar.

In Fig. 6 ist der Ummantelungsvorgang, wie er in bezug auf Fig. 4 beschrieben worden ist, schematisch dargestellt.

Zunächst zeigt Fig. 6 ein Kabelstrangbündel 1 im Querschnitt, bestehend aus sieben einzelnen Kabelsträngen 2, welche wiederum aus je sieben einzelnen Metallkabeln 2a bestehen. Derartige Metallkabelstrangbündel können in der Regel bereits in gebündelter Form bezogen werden. Wenn das Kabelstrangbündel 1 durch den Stauraum 42 hindurchtritt, wird das flüssige thermoplastische Polymer auf und in das Kabelstrangbündel 1 infolge Bildens eines Massepolsters gedrückt. Beim thermoplastischen Polymer kann es sich dabei um ein x-beliebiges, für Kabelummantelungen geeignetes Polymer handeln, wie beispielsweise Polyamid, Weich-PVC, Polypropylen, high density Polyäthylen etc. Wesentlich dabei ist nur, dass entsprechend dem gewählten Polymer die Temperaturführung im Querspritzkopf 11, d.h. entlang der Pinole 32, durch die Zuführkanäle 41, im Stauraum 42 und in den Bohrungen 37a gewählt wird. Die Temperaturen schwanken dabei je nach gewähltem Polymer zwischen 200° C und 300° C.

Wenn nun infolge der sehr hohen herrschenden Rückstaudrücke im Massepolster die einzelnen Kabelstränge 2 durch das Polymer umgeben sind, erfolgt die eigentliche Ummantelung der einzelnen Kabelstränge 2 in den Bohrungen 37a. Bei Austritt aus den Bohrungen 37a am Düsenkopfende verlässt das Kabelstrangbündel 1a das Werkzeug 11, wobei in Fig. 6 das Kabelstrangbündel 1a wiederum im Querschnitt dargestellt ist. Die einzelnen Kabelstränge 2 sind dabei durch eine Thermoplasthülle 4 ummantelt, wobei die verschiedenen Hüllen 4 infolge der Plastizität des Thermoplasten zusammenkleben und so bereits ein einziges Strangbündel bilden. Allerdings bestehen zwischen den einzelnen Thermoplasthüllen nach wie vor vereinzelt Zwischenräume 5, welche noch nicht vollständig mit dem Polymer ausgefüllt sind.

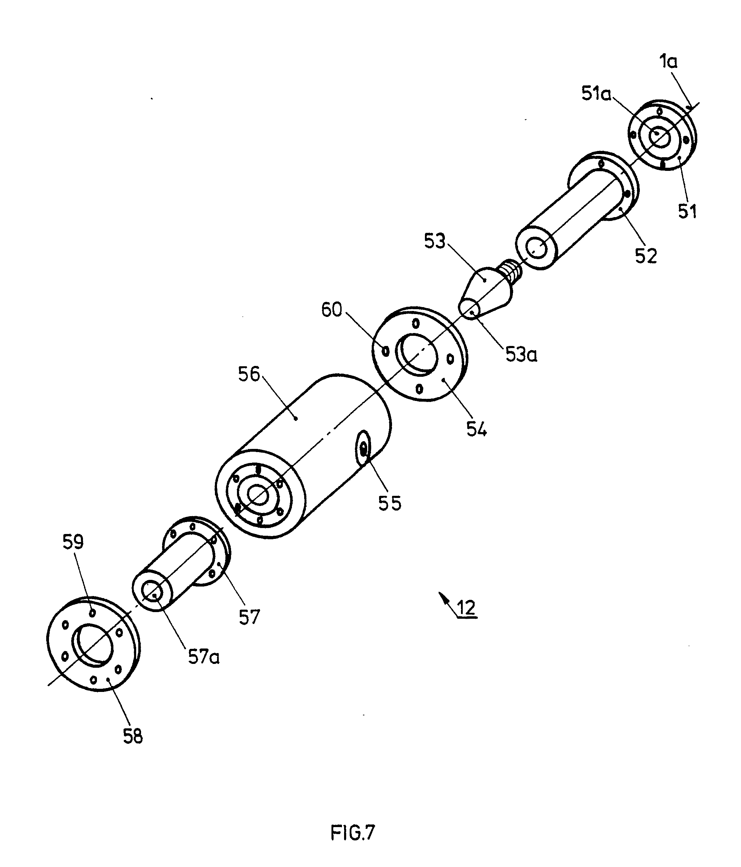

Das nun so bereits teilweise ummantelte Kabelstrangbündel 1a wird dem zweiten Querspritzkopf resp. erfindungsgemässen Extrusionswerkzeug 12 zugeführt, welches wiederum in Längsperspektive, in die einzelnen Komponenten zerlegt, in Fig. 7 dargestellt ist.

Das Werkzeug 12 ist an sich analog dem Werkzeug 11 gemäss Fig. 3 aufgebaut, wobei wiederum der Kabelstrang 1a durch einen Flansch 51 mit einer einzigen Bohrung 51a in die Pinole 52 eingeführt wird. An der Spitze der Pinole 52 ist eine Pinolenspitze 53 mit einer Bohrung 53a angeordnet, und weiter ist die Pinole 52 durch das Pinolengehäuse 56 ummantelt, welches wiederum eine Oeffnung 55 umfasst für die Einspeisung des flüssigen Polymers vom Extruder.

In Abweichung vom Werkzeug 11 umfasst hingegen das Werkzeug 12 einen zweiten Düsenkopf 57, welcher nur eine einzige Bohrung 57a umfasst. Der Düsenkopf 57 wird wiederum durch einen Flansch 58 mittels Inbusschrauben 59 am Pinolengehäuse 56 gehalten.

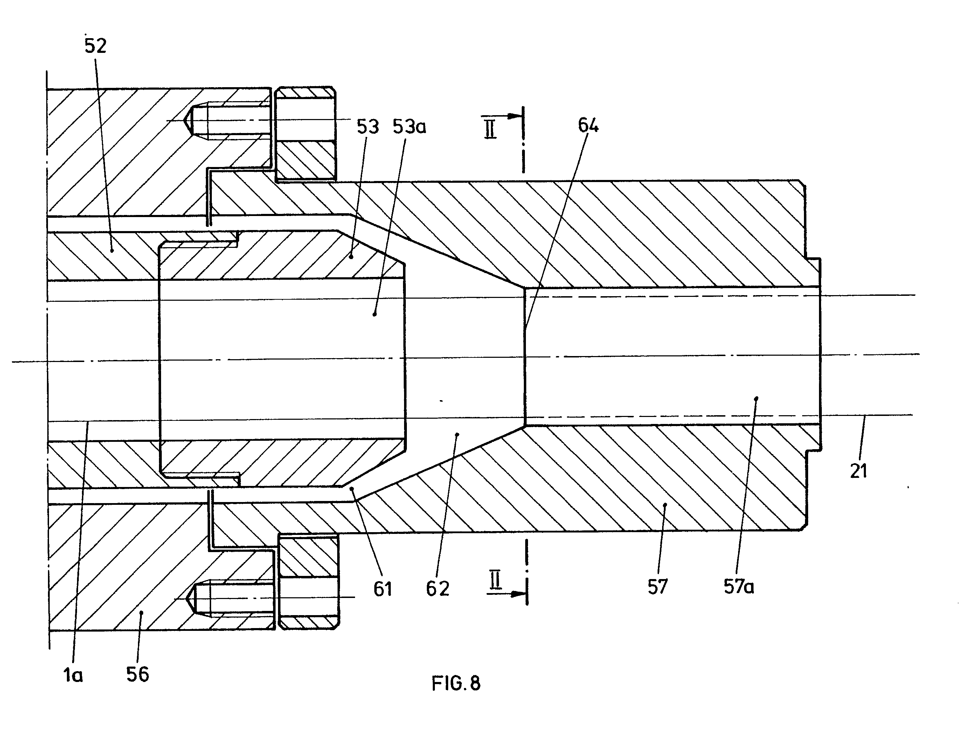

Fig. 8 zeigt analog zu Fig. 4 den Querspritzkopf 12 im Bereich des Stauraumes und des Düsenkopfes im Längsschnitt. In Abweichung vom Querspritzkopf gemäss Fig. 4 umfasst nun der Querspritzkopf 12 gemäss Fig. 8 einen abweichend ausgebildeten Stauraum 62, welcher an seiner Spitze, d.h. im Bereich der Düsenkopfbohrung 57a, nicht kugelig ausgebildet ist. Dies deshalb, da hier nicht mehr ein Massepolster mit sehr hohem Staudruck mit dem thermoplastischen Polymer aufgebaut werden muss. Vielmehr ist es hier wichtig, dass das gesamte Kabelstrangbündel 1a mit dem Thermoplasten als Ganzes ummantelt wird.

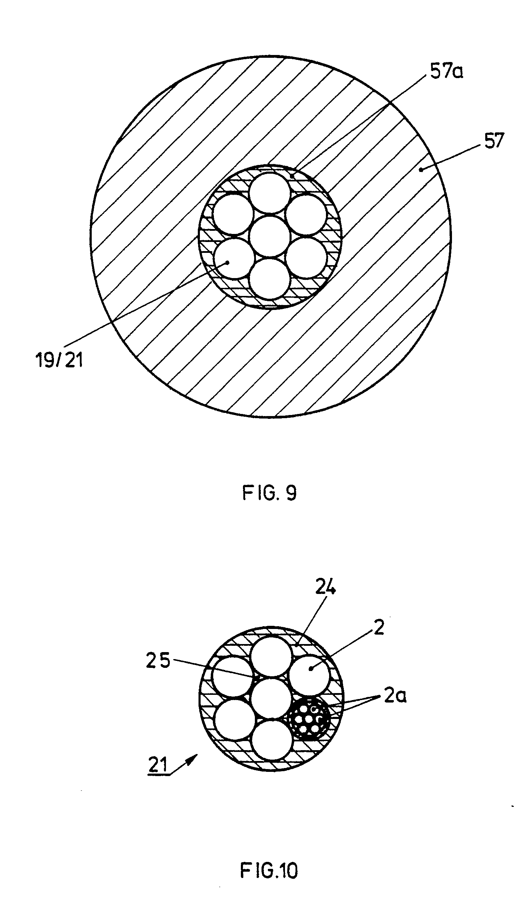

Fig. 9 zeigt dabei den Düsenkopf 57 im Querschnitt entlang der Linie II-II gemäss Fig. 8, wobei das Vorhandensein einer einzigen Bohrung 57a veranschaulicht wird. Durch diese einzige Bohrung 57a wird das gesamte Kabelstrangbündel 1a hindurchgezogen.

Die Funktionsweise der Ummantelung erfolgt dahingehend, dass das Kabelstrangbündel 1a zunächst durch die Pinole 52, die Pinolenspitze 53 und die entsprechende Bohrung 53a in den Stauraum 62 gelangt. Beim Durchtritt durch die Pinole resp. Pinolenspitze 53 wird das bereits am oder im Kabelstrangbündel 1a vorhandene Polymer wieder weitgehendst aufgeschmolzen. Beim Durchtritt durch die Bohrung 53a werden zudem die einzelnen Kabelstränge 2 (s. Fig. 6) derart zentrisch zusammengedrückt, dass die noch möglicherweise vorhandenen Lufteinschlüsse 5 (s. Fig. 6) vollständig mit dem flüssigen Polymer ausgefüllt werden. Beim Durchtritt durch den Stauraum 62 wird wiederum neues flüssiges thermoplastisches Polymer durch die Zuführkanäle 61 auf das Kabelstrangbündel 1a zugeführt, und beim Durchtritt durch die Bohrung 57a wird das Kabelstrangbündel endgültig gleichmässig ummantelt.

In Fig. 10 ist das Kabelstrangbündel 21 im Querschnitt dargestellt, wie es beim Düsenkopfende des Düsenkopfes 57 abgezogen wird. Dabei ist nun deutlich sichtbar, dass die einzelnen Kabelstränge 2 enger aneinandergedrückt sind und das Kabelstrangbündel gesamthaft durch eine gleichmässige Hülle 24 ummantelt ist. Die Zwischenräume 25 zwischen den einzelnen Kabelsträngen 2 sind nun vollständig mit dem Polymer ausgefüllt.

Beim thermoplastischen Polymer, welches im zweiten Extrusionswerkzeug dem Kabelstrangbündel 1a zugeführt wird, handelt es sich vorzugsweise um dasselbe Poly mer, welches bereits im ersten Querspritzkopf den noch unbeschichteten einzelnen Kabelsträngen zugeführt worden ist. Allerdings ist es auch möglich, zwei verschiedene Polymere zu verwenden. So kann beispielsweise im ersten Extrusionsschritt ein Polymer zugeführt werden, das wesentlich bessere Fliesseigenschaften aufweist und zudem eine höhere Flexibilität besitzt. Im zweiten Extrusionsschritt wird dann ein Polymer für die Aussenummantelung verwendet, das beispielsweise ausgezeichnete Abriebeigenschaften aufweist. Entsprechend sind dann die Extrusionsbedingungen, d.h. Temperaturführung, Druck usw., den entsprechenden Polymeren anzupassen.

Anschliessend an die Gesamtummantelung im zweiten Extrusionsschritt wird dann das ummantelte Kabelstrangbündel 21 einem Wasserbad zugeführt, wo die Ummantelung abgekühlt wird. Dieser Operationsschritt und weitere Operationsschritte erfolgen gemäss den heute üblichen und bekannten Verfahrensschritten bei Extrusion resp. Kabelummantelung.

Die in den Fig. 1 bis 10 dargestellten Beispiele können in x-beliebiger Art und Weise abgewandelt werden, wesentlich dabei ist nur, dass die Extrusion resp. Ummantelung zweistufig erfolgt und dass der Querspritzkopf für die erste Ummantelung einen Stauraum umfasst, der derart ausgebildet ist, dass im entstehenden Massepolster hohe Staudrücke entstehen, wodurch eine Penetration des flüssigen Thermoplasten zwischen die einzelnen Drähte resp. Kabelstränge ermöglicht wird.

## Ansprüche

1. Verfahren zum Ummanteln eines Kabelstrangbündels (1), bestehend aus mehreren Kabelsträngen, oder eines Drahtseiles, bestehend aus mehreren Drähten, mittels eines thermoplastischen Polymers, dadurch gekennzeichnet, dass die Ummantelung zweistufig in zwei sich nachfolgenden, getrennten Extrusionsschritten erfolgt.

2. Verfahren, vorzugsweise nach mindestens einem der Ansprüche, wie nach Anspruch 1, dadurch gekennzeichnet, dass in einem ersten Extrusionsschritt die Kabelstränge (1) resp. Drähte ummantelt werden und in einem anschliessenden, zweiten Extrusionsschritt das Strangbündel (1a) resp. das Drahtseil ummantelt wird.

3. Verfahren, vorzugsweise nach mindestens einem der Ansprüche, wie nach Anspruch 2, dadurch gekennzeichnet, dass im ersten Extrusionsschritt die Kabelstränge oder Drähte gemeinsam mittels einer ersten Extrusionsdüse (11) ummantelt werden, wobei jeder Strang resp. jeder Draht einzeln durch eine eigene Bohrung (37a) im ersten Düsenkopf (37) geführt und ummantelt wird, und dass im zweiten Extrusionsschritt die einzelnen ummantelten Stränge (1a) oder Drähte gemeinsam als Strangbündel resp. Drahtseil durch eine einzige Bohrung (37a) im Düsenkopf (57) einer zweiten Extrusionsdüse (12) geführt und ummantelt werden.

4. Verfahren, vorzugsweise nach mindestens einem der Ansprüche, wie nach Anspruch 3, dadurch gekennzeichnet, dass die Stränge resp. Drähte im ersten Extrusionskopf durch einen Stauraum (42), in welchen das plastische oder flüssige Polymer zugeführt wird, geleitet werden, welcher im Bereich der Bohrungen (37a) wenigstens teilweise kugelförmig ausgebildet ist.

5. Verfahren, vorzugsweise nach mindestens einem der Ansprüche, wie nach einem der Ansprüche 3 oder 4, dadurch gekennzeichnet, dass der erste und der zweite Extrusionskopf (11, 12) sog. Querspritzköpfe sind und das Polymer, wie in Querspritzköpfen üblich, in einem spitzen Winkel in bezug auf die Transportrichtung des zu ummantelnden Objektes (1, 1a) diesem zugeführt wird.

6. Verfahren, vorzugsweise nach mindestens einem der Ansprüche, wie nach einem der Ansprüche 1 bis 5, dadurch gekennzeichnet, dass die Kabelstränge resp. Drähte vor dem Ummanteln resp. vor dem Zuführen in das erste Extrusionswerkzeug erhitzt werden.

7. Verfahren, vorzugsweise nach mindestens einem der Ansprüche, wie nach einem der Ansprüche 1 bis 6, dadurch gekennzeichnet, dass zwei oder mehr Kabelstränge resp. zwei oder mehr Drähte einem ersten Extrusionswerkzeug zugeführt werden, in diesem Extrusionswerkzeug durch einen Stauraum geführt werden, in welchen ein flüssiges, thermoplastisches Polymer aus einem ersten Extruder zugespiesen wird, wobei der Stauraum im Bereich des Düsenkopfes wenigstens teilweise kugelförmig ausgebildet ist und wobei der Düsenkopf pro Kabelstrang resp. pro Draht eine Bohrung umfasst, in welchen jeder Kabelstrang resp. jeder Draht einzeln mit dem thermoplastischen Polymer ummantelt wird, die einzelnen Kabelstränge resp. Drähte nach Austritt aus der Extrusionsdüse des ersten Extrusionswerkzeuges zusammengeführt werden, wobei sich infolge des noch plastischen Polymers ein einzelnes, weitgehendst zusammenhängendes Strangbündel ergibt, dass anschliessend dieses zusammenhängende Strangbündel in ein zweites Extrusionswerkzeug zugeführt wird, wobei in einen zweiten Stauraum aus dem ersten oder einem zweiten Extruder dasselbe flüssige, thermoplastische Polymer zugeführt wird und das Strangbündel gemeinsam in einer einzigen Bohrung im Düsenkopf des zweiten Extrusionswerkzeuges mit dem Polymer ummantelt wird, und dass anschliessend an den Austritt aus der Werkzeugdüse das ummantelte Kabelstrangbündel resp. das ummantelte Drahtseil in einem Wasserbad abgekühlt wird und mittels geeigneter Mittel abgezogen wird.

8. Anordnung zum Ummanteln eines Kabelstrangbündels (1), bestehend aus mehreren Kabelsträngen, oder eines Drahtseiles, bestehend aus mehreren Drähten, mittels eines thermoplastischen Polymers, gekennzeichnet durch zwei Extrusionswerkzeuge, wobei ein erstes Werkzeug einen Stauraum zum Zuführen des Polymers auf die zu ummantelnden, mehreren Kabelstränge oder Drähte und zum Erzeugen eines Massepolsters umfasst, der im Bereich der Werkzeugdüse Wenigstens teilweise kugelförmig ausgebildet ist, und weiter die Düse pro Kabelstrang resp. pro Draht eine Bohrung umfasst, zum Ummanteln jedes einzelnen Stranges, und wobei ein zweites Werkzeug nur eine einzige Bohrung in der Werkzeugdüse umfasst, zum Ummanteln des ganzen Strangbündels.

9. Verwendung der Verfahren nach einem der Ansprüche 1 bis 7 für das Ummanteln von Kabelsträngen oder Drahtseilen für den Gebrauch in der Vorspanntechnik.

10. Querspritzkopf mit einem Extrusionswerkzeug für ein Verfahren zum Ummanteln eines Kabelstrangbündels oder eines Drahtseiles nach einem der Ansprüche 1 bis 7, dadurch gekennzeichnet, dass das Werkzeug einen Stauraum (42) zum Zuführen des Polymers auf die zu ummantelnden, mehreren Kabelstränge oder Drähte und zum Erzeugen eines Massepolsters umfasst, der im Bereich (44) der Werkzeugdüse (37) wenigstens teilweise kugelförmig ausgebildet ist, und weiter die Düse pro Kabelstrang resp. Draht eine Bohrung (37a) umfasst zum Ummanteln jedes einzelnen Stranges.

FIG. 2

FIG.1

EP 0 409 011 A1

FIG. 3

FIG.4

FIG.5

FIG.6

FIG.7

FIG.8

FIG. 9

FIG.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 044 844 (RYLANDS BROTHERS) * Seite 2, rechte Spalte, Zeilen 20-36; Figuren 4,5 * | 1-3 | B 29 C 47/02 B 29 C 47/28 B 07 B 1/16 |
| Y | | 4-10 | |
| Y | GB-A-2 167 000 (NOEL MARQUET & CIE S.A.) * Figur 1 * | 4,7-10 | |
| Y | DE-A-2 261 530 (FRANKISCHE ISOLIERROHR & METALLWAREN-WERKE, GEBR. KIRCHNER) * Figur 2 * | 5 | |
| Y | FR-A-2 565 887 (EMS EXTRUSION) * Zusammenfassung; Figuren * | 6 | |
| X | FR-A-2 532 342 (CABLE BELT LTD) * Seite 5, Zeile 4 - Seite 16, Zeile 14; Figur 7 * | 1-3,9 | |
| X | US-A-3 131 530 (A. DIETZ) * Figur * | 1-3,9 | RECHERCHIERTE SACHGEBIETE (Int. Cl.5) |
| X | GB-A- 3 996 (H. EVANS et al.) * Seite 2, Zeile 47 - Seite 3, Zeile 2; Figuren 3,4 * | 1-3 | B 29 C |
| A | FR-A-2 036 073 (V. SHANOK et al.) * Figuren * | 4,7,8, 10 | |
| A | FR-A-2 180 721 (SIEMENS AG) * Figuren 1,2 * | 4,7,8, 10 | |
| A | US-A-4 221 756 (G.F. PIPER et al.) * Figuren * -/- | 1-3,7,8 | |

Der vorliegende Recherchenbericht wurde für alle Patentansprüche erstellt

| Recherchenort | Abschlußdatum der Recherche | Prüfer |
|---|---|---|
| DEN HAAG | 04-10-1990 | BELIBEL C. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A- 883 209 (M.J.B.G. RENOU) <br> * Figuren * <br> --- | 1-3 | |
| A | US-A-4 197 695 (C.R. HUGHES et al.) <br> * Figur 2 * <br> ----- | 1-3 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 04-10-1990 | BELIBEL C. |